**Europäisches Patentamt**

(19) **European Patent Office**

**Office européen des brevets**

(11) Veröffentlichungsnummer: **0 089 040**
**B1**

(12) # EUROPÄISCHE PATENTSCHRIFT

(45) Veröffentlichungstag der Patentschrift:
**14.05.86**

(51) Int. Cl.⁴: **A 61 C 19/00**

(21) Anmeldenummer: **83102469.0**

(22) Anmeldetag: **12.03.83**

(54) Verfahren zum Wiederauffinden der Vertikalausrichtung eines Dentalmodelles.

(30) Priorität: **15.03.82 DE 3209398**

(43) Veröffentlichungstag der Anmeldung:
**21.09.83 Patentblatt 83/38**

(45) Bekanntmachung des Hinweises auf die Patenterteilung:
**14.05.86 Patentblatt 86/20**

(84) Benannte Vertragsstaaten:
**FR GB IT**

(56) Entgegenhaltungen:
**DE - U - 7 913 723**
**GB - A - 326 920**
**US - A - 2 095 665**
**US - A - 2 765 533**
**US - A - 4 358 269**

(73) Patentinhaber: **Fried. Krupp Gesellschaft mit beschränkter Haftung, Altendorfer Strasse 103, D-4300 Essen 1 (DE)**

(72) Erfinder: **Dunert, Rolf, Hinterfeld 6, D-5411 Eitelborn (DE)**

**Beschreibung**

Die Erfindung betrifft ein Verfahren zum Wiederauffinden der Vertikalausrichtung eines Dentalmodelles nach zeitweiliger Abnahme vom Kugelkopf-Modellhalter.

Für bestimmte, an einem Dentalmodell auszuführende Arbeiten muss eine gemeinsame Einschubrichtung gefunden werden. So muss bei mehreren Zähnen, die im natürlichen Gebiss meist unterschiedlich gekippt stehen, das Dentalmodell in eine solche Lage gebracht werden, dass alle Zähne möglichst parallel zu einer gedachten Senkrechten stehen. Dies geschieht in einem sogenannten Parallellometer, welches aus einem Ständer mit einem über einen waagrechten Tisch ragenden Kragarm besteht, bei welchen ein senkrecht gerichteter Stift nach Art eines Bohrers eingespannt werden kann. Auf dem Tisch befindet sich ein festmontierter oder auch beweglicher Kugelkopf-Modellhalter, der durch ein Kugelgelenk nach allen Seiten hin, zwecks Ausrichtung des Dentalmodelles auf den senkrechten Stift, gekippt werden kann. Ein Parallelometer, das zugleich auch als Bearbeitungsinstrument ausgebildet ist, ist beispielsweise durch die DE-A-2 930 016 bekannt.

Der Modellhalter kann hierbei eine Dreipunkt-Einspannvorrichtung sein, wie diese beispielsweise in dem DE-7 913 723 beschrieben ist.

Für das Einsetzen und Ausrichten von Modellen in Artikulatoren ist es schon seit langem bekannt, an der Unterseite des Dentalmodells eine Montageplatte zu befestigen, die ihrerseits an ihrer Unterseite Führungszapfen oder dgl. zur Montage im Artikulator aufweist. Durch das DE-U-8 026 986 ist es hierbei bekannt, ein Dentalmodell unter Verwendung einer an seinem Boden befestigten Montageplatte am schwenkbaren Kugelkopfteil eines Modellhalters festzuspannen.

Wenn man das Dentalmodell von den bekannten Kugelkopf-Modellhaltern abnimmt und mit diesen Modellhaltern zwischenzeitlich andere Arbeiten ausführt und dementsprechend den Kugelkopf verschwenkt, bereitet es grosse Schwierigkeiten, die bei ersten Arbeitsgängen festgelegte Einschubrichtung bei einer erneuten Einspannung des Dentalmodells wiederzufinden, wozu im allgemeinen wiederum umständliche Vermessungs- und Einstellarbeiten unter Verwendung des Parallelometers durchgeführt werden müssen.

Aus der GB-A-326 920 ist noch eine schraubstockartige, feststehende Vorrichtung mit Spannspitzen bekannt, mit der zwei einander zugeordnete Dentalmodelle aus Gips eingespannt und nach dem Ausspannen in der gleichen Ausrichtung oder Lage wieder eingespannt werden können. Dazu erzeugen die Spannspitzen an den Gipsmodellen beim ersten Einspannen Horizontal-Ausnehmungen, in die sie beim Wiedereinspannen der Modelle erneut eingreifen. Das Wiedereinspannen der Modelle ist hier jedoch auf ein und dieselbe Vorrichtung beschränkt, mit der die Lage der Dentalmodelle nach dem ersten Einspannen zudem nicht frei verändert werden kann.

Der Erfindung liegt die Aufgabe zugrunde, ein Arbeitsverfahren anzugeben, welches das Wiederauffinden der ursprünglich gewählten Einschubrichtung eines Dentalmodelles nach zeitweiliger Abnahme von einem Kugelkopf-Modellhalter erleichtert.

Zur Lösung dieser Aufgabe ist erfindungsgemäss vorgesehen, dass das Dentalmodell vor Abnahme vom Kugelkopf-Modellhalter an seinem Umfang mit in einer Horizontalebene verlaufenden Ausnehmungen versehen und bei einer Weiterbearbeitung zwischen, in diese Ausnehmungen eingreifenden, horizontal anstellbaren Spannbacken eingespannt wird. Hierbei wird das Dentalmodell zumindest an zwei sich gegenüberliegenden Sockelflächen mit den horizontalen Ausnehmungen versehen, wobei die Ausnehmungen vorzugsweise als U- oder V-förmige Nuten gefräst werden.

Solche Fräsarbeiten sind verhältnismässig rasch mit den üblichen Dentalbearbeitungsinstrumenten ausführbar, so dass die Markierung der einzuhaltenden Horizontalausrichtung keine zusätzlichen Geräteinvestitionen erforderlich macht. Vorteilhafterweise wird aber das Dentalmodell mit einer Sockelhöhe etwa gleich der maximal zu berücksichtigenden Schrägstellungshöhe, z.B. 40 mm, hergestellt. In einem solchen Fall ist es möglich, das Dentalmodell – auch bei einer Einspannung zwischen Backen – mit einer vollständig oder fast vollständig umlaufenden Ausnehmung zu versehen.

Für die Wiedereinspannung eines solchen, mit ein oder mehreren Horizontal-Ausnehmungen versehenen Dentalmodells eignet sich eine schraubstockartige, feststehende Einspannvorrichtung mit im Querschnitt sich verjüngenden, zentrierend in die Ausnehmungen eingreifenden Spannbacken. Eine solche Vorrichtung bzw. ein solcher Modellhalter ohne Kugelkopfgelenk weist eine verhältnismässig grosse freie Höhe zwischen den Spannbacken und dem Boden des Gerätes und einen Zentriereffekt auf. Dabei können die Spannbacken als kegelige, der Querschnittsform der Ausnehmungen angepasste Spitzen oder als längliche Keile ausgebildet sein, welche jeweils um eine Vertikalachse schwenkbar an der Einspannvorrichtung gelagert sind, so dass sich die Keile auf ihrer vollen Länge in die nutförmigen Ausnehmungen einlegen. Die Einspannvorrichtung kann drei Spannbacken aufweisen, von denen eine mittels einer Spindel in Richtung auf die Mitte zwischen den beiden anderen Spannbacken verstellbar ist. Alternativ kann die Einspannvorrichtung vier kreuzweise angeordnete Spannbacken besitzen, welche auf in einem Zentralstück befestigten Führungsstangen verschiebbar und an den Führungsstangen arretierbar sind.

Die Vorrichtung zum Wiedereinspannen des Dentalmodelles kann als gesondertes Gerät hergestellt werden, das in Verbindung mit einem Dentalbearbeitungsgerät verwendet wird.

Es ist aber auch möglich, auf der Fussplatte eines Dentalbearbeitungsgerätes nebeneinander einen üblichen Kugelkopfmodellhalter und eine Wiedereinspannvorrichtung der beschriebenen Art vorzusehen.

Die Erfindung wird im folgenden anhand der Zeichnung näher erläutert, in der zeigen:

Fig. 1 ein Dentalvermessungs- und -bearbeitungsgerät, mit welchem die Ausrichtung eines Dentalmodelles vorgenommen und markiert werden kann,

Fig. 2 in Seitenansicht ein erstes Ausführungsbeispiel einer Wiedereinspannungsvorrichtung,

Fig. 3 eine Draufsicht auf die Vorrichtung nach Fig. 2,

Fig. 4 in Seitenansicht eine zweite Ausführungsform einer Wiedereinspannvorrichtung und

Fig. 5 eine Draufsicht auf die Vorrichtung nach Fig. 4.

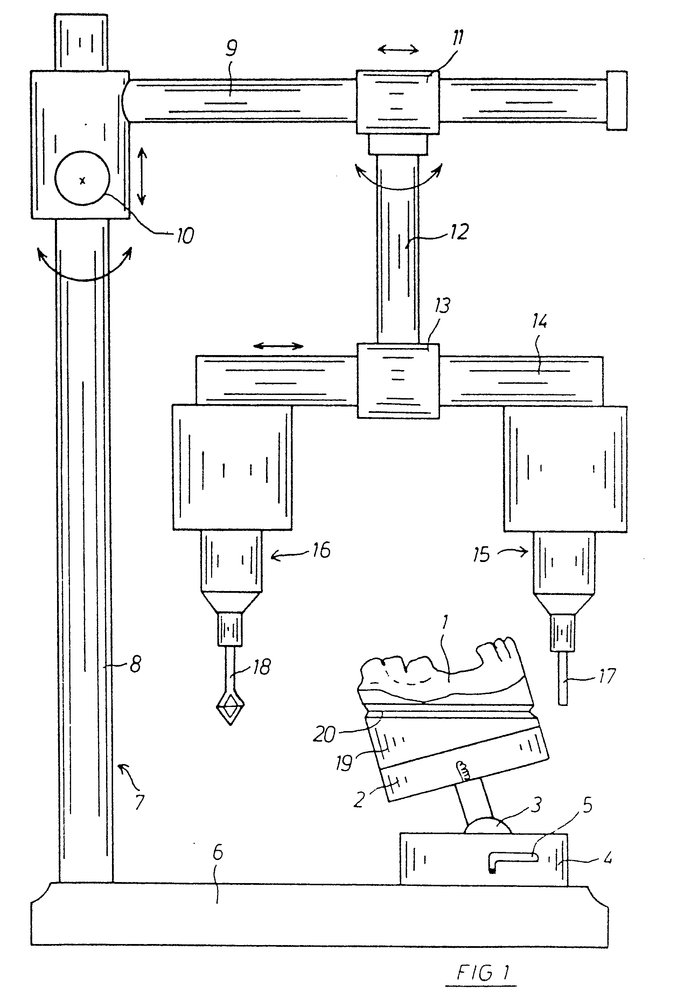

Fig. 1 zeigt ein Dentalmodell 1 aus beispielsweise Gips, das mit seiner Unterseite an einer Montageplatte 2 befestigt ist, welche ihrerseits über ein Kugelkopfgelenk 3 allseitig kippbar in einem Modellhalter 4 gelagert und mittels eines Klemmhebels 5 arretierbar ist. Der Modellhalter 4 liegt auf der Tischplatte 6 eines Dentalvermessungs- und -bearbeitungsgerätes 7 auf, welches eine Ständersäule 8 aufweist, auf der ein Kragarm 9 höhenverstellbar und in einer Horizontalebene schwenkbar gelagert und mittels einer Feststellschraube 10 arretierbar ist. Auf dem Kragarm 9 ist ein Schiebestück 11 verschieblich gelagert, in welchem eine, um eine vertikale Achse drehbare Stange 12 gelagert ist, die unten eine Schiebehülse 13 trägt, in welcher eine Stange 14 horizontal verschiebbar ist. Die Stange 14 trägt an jedem Ende einen Arbeitskopf 15, 16. Im Kopf 15 ist ein vertikaler Taststift 17 eingespannt, während im Kopf 16 ein doppelkegeliger Nutfräser 18 eingespannt ist.

Das Dentalmodell 1 wird in bekannter Weise unter Ausnutzung des vertikalen Taststiftes 17 derart gekippt und ausgerichtet, dass sich eine günstige Einschubrichtung ergibt. Anschliessend wird das Dentalmodell in dieser Stellung arretiert. Der Erfindung zufolge wird nunmehr mittels des Fräsers 18 in die Umfangsfläche des Sockels 19 des Dentalmodelles eine Ausnehmung 20 in Form einer V-Nut gefräst, die exakt horizontal ausgeführt wird und mindestens an zwei einander gegenüberliegenden Seiten des Sockels 19 ausgebildet wird, so dass die gewählte Einschubrichtung indirekt nunmehr durch eine Horizontalnut am Dentalmodell markiert ist.

Das Fräsen einer solchen Horizontal-Ausnehmung 20 kann selbstverständlich auch bei Verwendung anderer Dentalbearbeitungsgeräte als des Gerätes 7 ausgeführt werden, das hier nur als Beispiel gezeigt ist. Ebenfalls könnte das Dentalmodell auch über eine Drei-Backen-Einspannvorrichtung mit dem Kugelkopf 3 des Modellhalters 4 verbunden sein, in welchem Fall aber im allgemeinen die Nut 20 nur abschnittsweise, also nicht mehr ringsum verlaufend, gefräst werden kann.

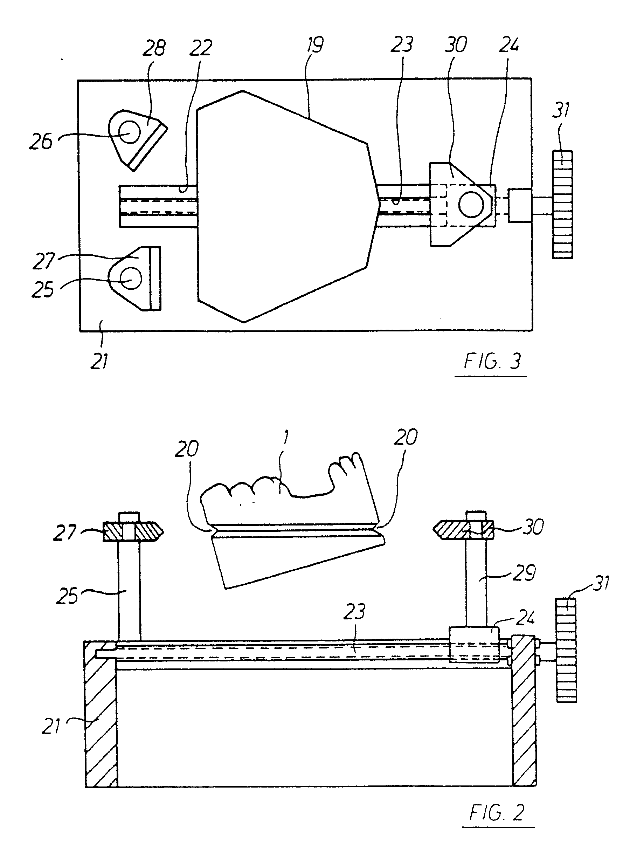

Wenn das Dentalmodell 1 nach Ausführung erster Arbeiten vom Modellhalter 4 abgenommen worden ist und später an ihm weitergearbeitet werden soll, wird das Gerät der Erfindung zufolge dann im Bereich der Horizontal-Ausnehmungen 20 wieder eingespannt, so dass sich automatisch wieder die in Fig. 1 gezeigte Ausrichtung des Modelles einstellt. Eine geeignete Wiedereinspannungsvorrichtung ist in den Fig. 2 und 3 gezeigt. Diese besteht aus einem Bodenteil 21, welches mit einer Längsausnehmung 22 versehen ist, in der eine Spindel 23 verläuft, auf welcher ein Mutterstück 24 verschiebbar, aber verdrehungsfest zwischen den Seitenwandungen der Längsausnehmung 22 geführt ist. An einem Längsende des Bodenteiles sind beidseits der Längsausnehmung 22 je ein Stehzapfen 25, 26 starr befestigt, an deren oberen Enden keilförmige Spannbacken 27, 28 um jeweils eine vertikale Achse schwenkbar gelagert sind. In gleicher Weise ist auf dem Mutterstück 24 ein Stehzapfen 29 angebracht, auf welchem ein keilförmig angespitzter Spannbacken 30 drehbar gelagert ist. Beim Drehen der Spindelmutter 31 wird die bewegliche Spannbacke 30 in Richtung auf die beiden anderen Spannbacken 27, 28 bewegt, wobei die keilförmigen Schneiden der drei Spannbacken in die Ausnehmungen 20 des Dentalmodelles 1 eingreifen und das Modell 1 exakt zentrieren.

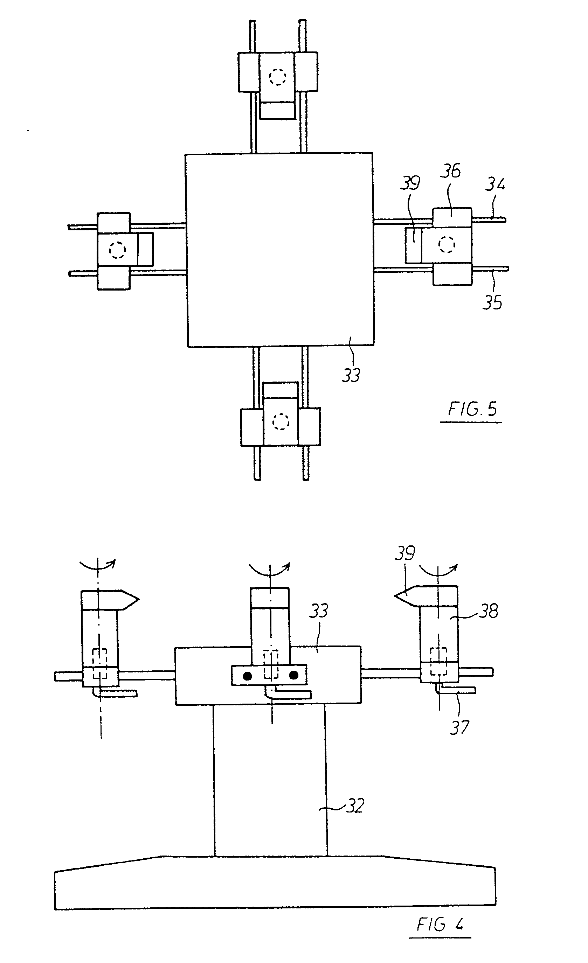

Die Fig. 4 und 5 zeigen ein zweites Ausführungsbeispiel einer Wiedereinspannvorrichtung. Auf einem Fussteil 32 ist hier ein quadratisches Zentralstück 33 befestigt, von dessen vier Seiten jeweils zwei Stangen 34, 35 abragen. Auf jedem Stangenpaar 34, 35 ist ein Schiebestück 36 angeordnet, welches mittels eines Arretierhebels 37 festgeklemmt werden kann. Jedes Schiebestück 36 trägt einen drehbar gelagerten Bolzen 38, an welchem oben eine keilförmige Spannbacke 39 befestigt ist. Ein mit einer – möglichst umlaufenden Nut 20 versehenes Dentalmodell wird zweckmässigerweise an zwei Spannbacken 39 angelegt, wonach dann die beiden anderen Spannbacken ebenfalls in die Nut 20 geschoben werden, so dass das Modell wiederum automatisch in der gewünschten Ausrichtung wieder eingespannt wird.

**Patentansprüche**

1. Verfahren zum Wiederauffinden der Vertikalausrichtung eines Dentalmodells (1) nach zeitweiliger Abnahme vom Kugelkopf-Modellhalter (4), dadurch gekennzeichnet, dass das Dentalmodell (1) vor Abnahme vom Modellhalter (4) an seinem Umfang mit in einer Horizontalebene verlaufenden Ausnehmungen (20) versehen und bei einer Weiterbearbeitung zwischen in diese Ausnehmungen eingreifenden, horizontal anstellbaren Spannbacken (27, 28, 30) eingespannt wird.

2. Verfahren nach Anspruch 1, dadurch gekennzeichnet, dass das Dentalmodell (1) zumindest an zwei sich gegenüberliegenden Sockelflächen mit den horizontalen Ausnehmungen (20) versehen wird.

3. Verfahren nach den Ansprüchen 1 und 2, dadurch gekennzeichnet, dass die Ausnehmungen (20) als U- oder V-förmige Nuten gefräst werden.

4. Verfahren nach den Ansprüchen 1 bis 3, dadurch gekennzeichnet, dass das Dentalmodell (1) mit einer Sockelhöhe etwa gleich der maximal zu berücksichtigenden Schrägstellungshöhe hergestellt wird.

## Claims

1. Method for recovering the vertical orientation of a dental model (1) after temporary removal from the ball-and-socket-type model holder (4), such method being characterized in that the dental model (1), prior to removal from the model holder (4), is provided on its circumferance with recesses (20) running in a horizontal plane, and in the case of further processing is clamped between horizontally adjustable clamping jaws (27, 28, 30) engaging said recesses.

2. Method according to claim 1 characterized in that the dental model (1) is provided with the horizontal recesses (20) on at least two opposite base surfaces.

3. Method according to claims 1 and 2 characterized in that the recesses (20) are milled as U- or V-shaped grooves.

4. Method according to claims 1 to 3 characterized in that the dental model (1) is produced with a base height roughly equal to the maximum inclined-position height to be allowed for.

## Revendications

1. Méthode pour retrouver l'orientation verticale d'un modèle dentaire (1) après enlèvement momentané du support de modèle à tête sphérique (4), caractérisé en ce que le modèle dentaire (1) est, avant son enlèvement du support de modèle (4), muni sur son pourtour d'évidements (20) situés dans un plan horizontal et, pour un usinage ultérieur, serré entre les mâchoires de serrage (27, 28, 30) qui peuvent se placer horizontalement et se mettent en prise dans ces évidements.

2. Méthode selon la revendication 1, caractérisé en ce que le modèle dentaire (1) est muni de ces évidements horizontaux (20) au moins sur deux surfaces de socle opposées.

3. Méthode selon les revendications 1 et 2, caractérisé en ce que les évidements (20) sont des rainures en forme d'U ou de V réalisées par fraisage.

4. Méthode selon l'une des revendications 1 à 3, caractérisé en ce que le modèle dentaire (1) a une hauteur de socle à peu près égale à la hauteur maximale de la position oblique à envisager.

FIG 1

FIG. 3

FIG. 2

FIG. 5

FIG 4